# EUROPÄISCHE PATENTANMELDUNG

(11) **EP 1 878 974 A1**
(43) Veröffentlichungstag der Anmeldung: **16.01.2008**
(21) Anmeldenummer: 07011952.4
(22) Anmeldetag: 19.06.2007
(51) Int. Cl.: F24D 3/08, F24D 11/02, F24D 12/02, F24D 15/04, F24H 1/48, F24H 4/04

(54) **Kombispeicher**

(30) Priorität: 13.07.2006 DE 102006032669
(71) Anmelder: Günthner, Ewald, 72175 Dornhan-Leimstetten (DE)
(72) Erfinder: Günthner, Ewald, 72175 Dornhan-Leimstetten (DE)
(74) Vertreter: Weiss, Peter

(57) **Zusammenfassung**

Bei einem Kombispeicher zur Bereitstellung von Brauch-und Heizungswasser, erwärmt durch mehrere Energiequellen, mit mindestens einem Speicherteil (5) für Brauchwasser und einem Speicher für Heizungswasser, soll der Speicher für Heizungswasser in mehrere Kammern unterteilt sein und mit einer Wärmepumpe in Verbindung stehen.

## Beschreibung

Die Erfindung betrifft einen Kombispeicher zur Bereitstellung von Brauch- und Heizungswasser, erwärmt durch mehrere Energiequellen, mit mindestens einem Speicher für Brauchwasser und einem Speicher für Heizungswasser.

Derartige Kombispeicher sind in verschiedenen Bauformen bekannt und auf dem Markt erhältlich; sie haben sich auch durchaus bewährt, wie z. B. der sogenannte Kombischichtenspeicher der Anmelderin. Bei diesem thermisch geregelten Schichtenkombispeicher mit einer multifunktionellen und hygienischen Brauchwasseraufbereitung ist eine Kombination aus einem Pufferspeicher mit Solar - Heizregister und Warmwasser - mit einem Saugdurchlauferwärmer in einem Gerät vereint.

Insbesondere durch die Verknappung der Energieträger wie Öl stellt sich die Frage, was gegen die damit einhergehende Kostenexplosion getan werden kann.

Es ist daher Aufgabe der vorliegenden Erfindung, einen geeigneten Kombispeicher zu schaffen, der zum einen ermöglicht, auf Energiequellen zurückzugreifen, die auch weiterhin in unbegrenztem Umfang zur Verfügung stehen, und die zum anderen kostenmäßig für den Verbraucher von Interesse sind.

Diese Aufgabe wird erfindungsgemäß dadurch gelöst, dass der Speicher für Heizungswasser des Kombispeichers in mehrere Kammern unterteilt ist und als weitere Energiequelle mit einer Wärmepumpe in Verbindung steht.

Nach Maßgabe der Erfindung ist als bevorzugte Lösung vorgesehen, dass mindestens zwei Kammern des Speichers für Heizungswasser über eine Wärmepumpe miteinander verbunden sind.

Bei einer Wärmepumpe handelt es sich ganz allgemein um eine maschinelle Anlage, die unter Aufwendung mechanischer bzw. elektrischer Energie einem auf relativ niedriger Temperatur befindlichen Wärmespeicher eine bestimmte Wärmeenergie entzieht und diese dann einem anderen Wärmespeicher oder Wärmetauscher, der bereits eine höhere Temperatur besitzt, zuführt und ihn so weiter erwärmt.

Von diesem Prinzip macht die vorliegende Erfindung Gebrauch, indem die im Rücklaufwasser eines Heizkreislaufes noch vorhandene Wärmeenergie von der Wärmepumpe ausgenutzt wird, um die Temperatur des Heizungswassers für den Vorlauf des Heizkreislaufes und für die Erwärmung des Brauchwassers zu erhöhen.

Zu diesem Zweck ist vorteilhaft vorgesehen, dass diejenige Kammer des Kombispeichers, die als Wärmequelle für die Wärmepumpe dient, mit dem Rücklauf des Heizungswassers verbunden ist. Hierbei kann es zweckmäßig sein, dass zwischen der Kammer, die als Wärmequelle für die Wärmepumpe dient und der Wärmepumpe selbst zusätzlich ein als Puffer ausgelegter Speicher vorgesehen ist.

Auch ist es möglich, dass als Wärmequelle für die Wärmepumpe ein vom Kombispeicher separater Speicher benutzt wird, z. B. ein See; es kann aber auch das Grundwasser, der Erdboden oder die Außenluft zur Wärmeabgabe herangezogen werden.

Umgekehrt ist dann diejenige Kammer des Kombispeichers, die als Wärmespeicher für die Wärmepumpe dient, mit dem Vorlauf des Heizungswassers verbunden.

Zusätzlich zu einer Wärmepumpe sind erfindungsgemäß weitere Energiequellen mit unerschöpflichen Reserven vorgesehen, und zwar z. B. eine Solareinrichtung, die mit mindestens einer Kammer des Speichers für Heizungswasser in Verbindung steht. Parallel hierzu oder statt einer Solareinrichtung kann als weitere Energiequelle mindestens eine Einrichtung zur Erzeugung von Wärme durch Verbrennung von geeignetem, d. h. genügend zur Verfügung stehenden Brennstoffen vorgesehen sein. Man denke beispielsweise an den Einsatz des erfindungsgemäßen Kombispeichers in südlichen Ländern, wo erstens die Sonnenenergie genügend vorhanden ist und zweitens als Zusatzfeuerung eventuell Holz infrage kommt, sodass die ganze Anlage ohne Öl als Energieträger auskommt.

Der auch in dem Kombispeicher sich befindende Speicherteil für Brauchwassererwärmung, z. B. zum Duschen, besitzt vorteilhaft einen spiralförmigen Wärmetauscher, an dessen einem Ende sich der Kaltwasserzufluss und an dessen anderem Ende sich der Warmwasserabfluss befindet, wobei vorteilhaft der spiralförmige Wärmetauscher eine Verblendung zur Verbesserung der Wasserzirkulation aufweist, welche noch dadurch begünstigt wird, dass die Verblendung vorzugsweise mittig eine Öffnung besitzt, zu der dann die Zuführung des erwärmten Heizungswassers erfolgt. Letzteres geschieht zweckmäßigerweise durch ein mit einem Thermostatventil verbundenen Rohr.

Schließlich ist es auch zweckmäßig, dass die Übertragung der Wärme auf das Heizungswasser durch die weiteren Energiequellen ebenfalls über einen spiralförmigen Wärmetauscher erfolgt.

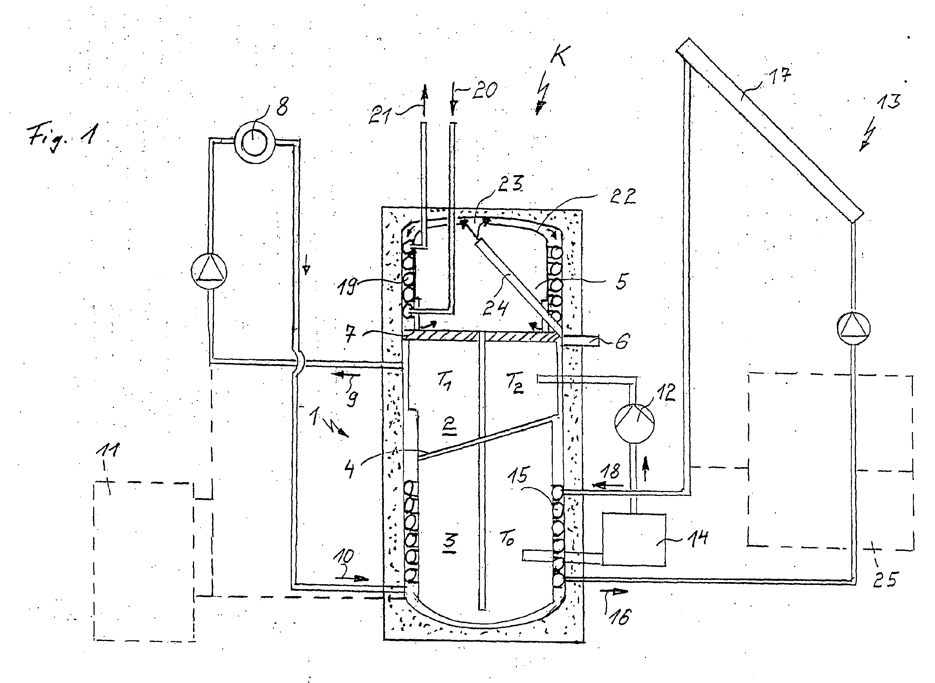

Weitere Merkmale und Vorteile der vorliegenden Erfindung ergeben sich aus der nachfolgenden Beschreibung eines bevorzugten Ausführungsbeispiels in Verbindung mit der Zeichnung, die als einzige Figur eine Fig. 1 zeigt, in der schematisch ein Kombispeicher zur Bereitstellung von Brauchwasser und Heizungswasser sowie verschiedener Energiequellen dargestellt ist.

Gemäß Fig. 1 besitzt ein erfindungsgemäßer Kombispeicher K zur Bereitstellung von Brauchwasser und Heizungswasser einen Heizwasserpufferspeicher 1 mit einer oberen Kammer 2 und einer: unteren Kammer 3, welche durch eine thermische Trennwand 4 im wesentlichen voneinander getrennt sind.

Ferner ist im oberen Bereich des Kombispeichers K ein Speicherteil für Brauchwassererwärmung 5 vorgesehen, der über ein Thermostatventil 6 mit der oberen Kammer 2 des Heizwasserpufferspeichers 1 verbunden ist, aber ansonsten durch eine thermische Trennung 7 von der oberen Kammer 2 separiert ist.

An den Heizwasserpufferspeicher 1 ist als Verbraucher ein Heizkreislauf 8 angeschlossen, und zwar ist der Vorlauf - bezeichnet mit 9 - mit der oberen Kammer 2 und der Rücklauf - bezeichnet mit 10 - mit der unteren Kammer 3 verbunden. Alternativ ist auf der gleichen Seite ein herkömmlicher Wärmeerzeuger 11 gestrichelt dargestellt, der üblicherweise mit Öl gefeuert wird, aber bei diesem Ausführungsbeispiel durch eine Wärmepumpe 12 und eine Solareinrichtung 13 ersetzt werden soll.

Die Wärmepumpe 12 ist zwischen der oberen Kammer 2 und der unteren Kammer 3 vorgesehen. Hierbei dient die untere Kammer 3 als Wärmequelle und die obere Kammer 2 als Wärmespeicher für die Wärmepumpe 12, wobei noch ein als Puffer ausgelegter Speicher 14 vorgesehen sein kann.

Die Hauptbestandteile der Wärmepumpe 12 sind wie bei einer Kältemaschine Verdampfer, Verdichter, Kondensator und Drosselventil, wobei diese üblichen Komponenten nicht im einzelnen dargestellt sind. Hierbei wird bekanntlich ein geeignetes Kältemittel in dem sich mit der Wärmequelle im Wärmeaustausch befindlichen Verdampfer bei einer bestimmten Temperatur verdampft und dann vom Verdichter angesaugt und verdichtet, wobei dadurch der Kühlmitteldampf eine höhere Temperatur annimmt und anschließend im Kondensator wieder kondensiert; die dabei freiwerdende Wärmeenergie wird dann an den Wärmespeicher abgegeben, dessen Temperatur sich dann entsprechend erhöht. Das kondensierte Arbeitsmedium selbst strömt sodann durch das Drosselventil, entspannt sich dabei auf den Verdampferdruck und der Kreisprozess beginnt von neuem.

Bei dem vorliegenden Ausführungsbeispiel bedeutet dieser Kreisprozess folgendes: Angenommen die Heizwassertemperatur der unteren Kammer 3 hat durch den abgekühlten Rücklauf 10 des Heizkreislaufes 8 im Bereich des Wärmepumpenanschlusses noch eine Temperatur von To (z. B. 10°C), dann wird aus diesem Wärmereservoir eine bestimmte Wärmemenge durch die Wärmepumpe entnommen, mit der die mit T1 bezeichneten Temperaturen des Heizwassers der oberen Kammer 2 auf eine Temperatur T2 angehoben wird, z. B. von 50°C auf 55°C, was ein ΔT = T2 - T1 = 5°C bedeutet. Die Verwendung dieser noch nutzbaren Wärme zur Temperaturerhöhung des Vorlaufwassers 9 für den Heizkreislauf 8 einerseits und des Brauchwassers in der oberen Kammer 2 andererseits ist ein wesentlicher Punkt der vorliegenden Erfindung.

Die zusätzlich zur Wärmepumpe 12 vorgesehene Solareinrichtung 13 ist mit einem spiralförmigen Wärmetauscher 15 verbunden, der sich in der unteren Kammer 3 des Heizwasserpufferspeichers 1 befindet. Dabei zirkuliert entsprechend dem Pfeil 16 das zu erwärmende Wasser in einen Sonnenkollektor 17 und von diesem von der Sonne auf eine höhere Temperatur gebracht wieder zurück entsprechend dem Pfeil 18 in den spiralförmigen Wärmetauscher 15, um sodann auch das Heizwasser in der unteren Kammer 3 zu erhöhen, welches dann erwärmt in die obere Kammer 2 steigt, um dann wiederum in seiner Temperatur durch die zugeführte Wärmeenergie der Wärmepumpe 12 einerseits in den Vorlauf 9 des Heizkreislaufes 8 zu gelangen und andererseits über das Thermoventil 6 in den Brauchwasserspeicher 5.

Dieses Speicherteil 5 für Brauchwasser besitzt hierbei ebenfalls einen spiralförmigen Wärmetauscher - bezeichnet mit 19-, an dessen einem Ende ein Zufluss 20 für Kaltwasser und an dessen anderen End ein Abfluss 21 für Warmwasser vorgesehen ist. Zu einer Verbesserung der Wasserzirkulation (angedeutet durch diverse Pfeile), besitzt der spiralförmige Wärmetauscher 19 eine Verblendung 22, die eine mittige Öffnung 23 aufweist, zu der ein mit dem Thermostatventil 6 verbundenen Rohr 24 verläuft, welches das aus der oberen Kammer 2 kommende erwärmte Heizwasser direkt aus dem spiralförmigen Wärmetauscher 19 zuführt. Hierbei wird der Zufluss an erwärmten Heizwasser in das Speicherteil 5 für Brauchwasser durch das Thermostatventil 6 geregelt, und zwar je nach dessen Einstellung. Soll beispielsweise die Temperatur in dem Speicherteil 5 etwa bei 45 °C konstant gehalten werden, dann öffnet das Thermostatventil 6 immer erst dann, wenn die vorgegebene Temperatur von 45 °C um einen bestimmten Betrag abgesunken ist. Gleichzeitig mit dem Öffnen des Thermostatventils 6 strömt dann Heizungswasser mit z. B. T2 = 55 °C in das Speicherteil 5 für Brauchwasser, und zwar so lange bis die vorgegebene Temperatur von 45 °C im Brauchwasserspeicher wieder gegeben ist.

Statt oder neben der Solareinrichtung 13 ist als weitere Energiequelle auch eine Einrichtung zur Erzeugung von Wärme durch Verbrennung von geeigneten Brennstoffen möglich. Diese Einrichtung ist in Fig. 1 gestrichelt mit 25 angedeutet, wobei die als Feuerung ausgebildete Energiequelle wahlweise für unterschiedliche Brennstoffe, z. B. Kohle, Holz usw. ausgelegt sein kann.

Insgesamt wird mit der vorliegenden Erfindung ein wirtschaftlich verbessertes Heizungssystem für Brauch-und Heizungswasser angegeben, bei dem insbesondere die Vorteile einer Wärmepumpe als integraler Bestandteil des Systems ausgenutzt werden.

### Bezugszeichenliste

| | | | | | |
|---|---|---|---|---|---|
| 1 | Heizwasserpufferspei cher | 34 | | 67 | |
| 2 | Obere Kammer | 35 | | 68 | |
| 3 | Untere Kammer | 36 | | 69 | |
| 4 | Thermische Trennwand | 37 | | 70 | |
| 5 | Speicherteil | 38 | | 71 | |
| 6 | Thermostatventil | 39 | | 72 | |
| 7 | Thermische Trennung | 40 | | 73 | |
| 8 | Heizkreislauf | 41 | | 74 | |
| 9 | Vorlauf | 42 | | 75 | |
| 10 | Rücklauf | 43 | | 76 | |
| 11 | Wärmeerzeuger | 44 | | 77 | |
| 12 | Wärmepumpe | 45 | | 78 | |
| 13 | Solareinrichtung | 46 | | 79 | |
| 14 | Pufferspeicher | 47 | | | |
| 15 | Wärmetauscher | 48 | | | |
| 16 | Solarzufluss | 49 | | | |
| 17 | Solarkollektor | 50 | | | |
| 18 | Solarabfluss | 51 | | | |
| 19 | Wärmetauscher | 52 | | | |
| 20 | Zufluss KW | 53 | | | |
| 21 | Abfluss KW | 54 | | | |
| 22 | Verblendung | 55 | | | |
| 23 | Öffnung | 56 | | | |
| 24 | Zuführung (Rohr) | 57 | | | |
| 25 | | 58 | | K | Kombispeicher |
| 26 | | 59 | | Tₒ | Temperatur Wärmequelle |
| 27 | | 60 | | T1 | Temperatur Wärmespeicher |
| 28 | | 61 | | T2 | erhöhte Temperatur Wärmespeicher |
| 29 | | 62 | | | |
| 30 | | 63 | | | |
| 31 | | 64 | | | |
| 32 | | 65 | | | |
| 33 | | 66 | | | |

## Patentansprüche

1. Kombispeicher zur Bereitstellung von Brauch- und Heizungswasser, erwärmt durch mehrere Energiequellen, mit mindestens einem Speicherteil (5) für Brauchwasser und einem Speicher für Heizungswasser, **dadurch gekennzeichnet, dass** der Speicher (1) für Heizungswasser in mehrere Kammern (2, 3) unterteilt ist und mit einer Wärmepumpe (12) in Verbindung steht.

2. Kombispeicher nach Anspruch 1, **dadurch gekennzeichnet, dass** mindestens zwei Kammern (2, 3) des Speichers (1) für Heizungswasser über die Wärmepumpe (12) miteinander verbunden sind.

3. Kombispeicher nach Anspruch 1 oder 2, **dadurch gekennzeichnet, dass** diejenige Kammer (3), die als Wärmequelle für die Wärmepumpe (12) dient, mit dem Rücklauf (10) des Heizungswassers verbunden ist.

4. Kombispeicher nach Anspruch 3, **dadurch gekennzeichnet, dass** zwischen der Kammer (3), die als Wärmequelle für die Wärmepumpe (12) dient und der Wärmepumpe (12) selbst ein als Puffer ausgelegter Speicher (14) vorgesehen ist.

5. Kombispeicher nach Anspruch 1, **dadurch gekennzeichnet, dass** als Wärmequelle für die Wärmepumpe (12) ein vom Kombispeicher separater Speicher dient.

6. Kombispeicher nach einem der Ansprüche 1 bis 5, **dadurch gekennzeichnet, dass** diejenige Kammer (2), die als Wärmespeicher für die Wärmepumpe (12) dient, mit dem Vorlauf (9) des Heizungswassers verbunden ist.

7. Kombispeicher nach einem der vorhergehenden Ansprüche, **dadurch gekennzeichnet, dass** zusätzlich zur Wärmepumpe (12) eine weitere Energiequelle (11; 13; 25) vorgesehen ist.

8. Kombispeicher nach Anspruch 7, **dadurch gekennzeichnet, dass** als weitere Energiequelle eine Solareinrichtung (13) vorgesehen ist, die mit mindestens einer Kammer (3) des Speichers für Heizungswasser in Verbindung steht.

9. Kombispeicher nach Anspruch 7, **dadurch gekennzeichnet, dass** als weitere Energiequelle mindestens eine Einrichtung (25) zur Erzeugung von Wärme durch Verbrennung von geeigneten Brennstoffen dient.

10. Kombispeicher nach Anspruch 9, **dadurch gekennzeichnet, dass** die als Feuerung ausgebildete Energiequelle wahlweise für unterschiedliche Berennstoffe ausgelegt ist.

11. Kombispeicher nach Anspruch 10, **dadurch gekennzeichnet, dass** die als Feuerung ausgelegte Energiequelle einzeln oder mehrfach vorgesehen ist.

12. Kombispeicher nach einem der vorhergehenden Ansprüche, **dadurch gekennzeichnet, dass** der Speicherteil (5) für Brauchwasser einen spiralförmigen Wärmetauscher (19) aufweist, an dessen einem Ende ein Zufluss (20) für Kaltwasser und an dessen anderem Ende ein Abfluss (21) für Warmwasser vorgesehen ist.

13. Kombispeicher nach Anspruch 12, **dadurch gekennzeichnet, dass** der spiralförmige Wärmetauscher (19) im Speicher (5) für Brauchwasser eine Verblendung (22) zur Verbesserung der Wasserzirkulation aufweist.

14. Kombispeicher nach Anspruch 13, **dadurch gekennzeichnet, dass** die Verblendung (22) vorzugsweise eine mittige Öffnung (23) besitzt, zu der eine Zuführung (24) des erwärmten Heizungswasser erfolgt.

15. Kombispeicher nach Anspruch 14, **dadurch gekennzeichnet, dass** die Zuführung (24) für das erwärmte Heizungswasser als ein mit einem Thermostatventil (6) verbundenes Rohr ausgebildet ist.

16. Kombispeicher nach Anspruch 8 oder 9, **dadurch gekennzeichnet, dass** die Übertragung der Wärme auf das Heizungswasser innerhalb der Kammer (3) durch eine weitere Energiequelle über eine spiralförmigen Wärmetauscher (15) erfolgt.
